# EUROPEAN PATENT APPLICATION

(11) **EP 1 764 489 A1**
(43) Date of publication of application: **21.03.2007**
(21) Application number: 06018263.1
(22) Date of filing: 31.08.2006
(51) Int. Cl.: F01M 1/16, F16K 17/04

(54) **Structure of relief valve for oil pump**

(30) Priority: 20.09.2005 JP 2005272027
(71) Applicant: Mazda Motor Corporation, Aki-gun, Hiroshima 730-8670 (JP)
(72) Inventor: Ohtsuki, Ken, Aki-gun Hiroshima 730-8670 (JP); Yamaya, Mitsutaka, Aki-gun Hiroshima 730-8670 (JP); Yamaguchi, Masanori, Aki-gun Hiroshima 730-8670 (JP)
(74) Representative: Laufhütte, Dieter

(57) **Abstract**

When oil pressure of discharged oil of a pump is increased, a plunger moves backward against spring force of a spring to open relief holes. One of the relief holes is opened in advance of the other relief hole. A part of the one relief hole which is opened in advance is set smaller in width to cause no abrupt change in total open area of the relief holes in backward movement of the plunger.

## Description

### Background of the Invention

### Field of the Invention

The present invention relates to a relief valve structure for an oil pump.

### Background Art

In engines for automobiles, oil discharged from an oil pump is supplied to parts to be lubricated and parts to be cooled. In the oil pump, which is driven by the engine, the pressure of the oil supplied to the respective parts of the engine becomes too high at high engine speed. Therefore, an oil pressure adjusting chamber having a relief hole is provided in the middle of an oil passage so as to relieve part of the oil discharged from the oil pressure adjusting chamber. In general, a plunger is set in the oil pressure adjusting chamber with forward force applied by a spring to allow the relief hole to be closed. When the oil pressure in the oil pressure adjusting chamber is increased, the plunger accordingly moves backward against the forward force of the spring to allow the relief hole to be opened. Thus, part of the discharged oil is relieved for restricting the oil supply conditions, such as a pressure and a flow rate, to predetermined values. Ordinarily, a relief valve structure is employed which adjusts the oil pressure at high engine speed to be slightly higher than that at low engine speed.

There may be caused a following phenomenon when the engine speed is in a comparatively low speed range even though discharged oil relief starts in association with an increase in engine speed. Namely, when the relief hole is opened by backward movement of the plunger in association with an increase in oil pressure, the oil pressure reduces on the instant by the relief to cause the plunger to move forward, thereby closing the relief hole. Then, the oil pressure increases again to cause the plunger to move backward again. In short, opening and closing of the relief hole are repeated frequently.

Frequent opening and closing of the relief hole, that is, repetition of a reciprocating motion of the plunger in a short period of time causes oil pressure pulsation in the oil supply passage. The pulsation rocks the plunger to cause noise in low-speed running of a vehicle.

To tackle this problem, Japanese Patent Application Laid Open Publication No. 2001-241560A proposes a relief valve structure having a pair of relief holes, wherein an initial change rate of open areas when the relief holes starts being opened by backward movement of a plunger is set smaller than a later change rate thereof. Similarly, Japanese Patent Application Laid Open Publication No. 5-332116A discloses that a relief hole is formed so that a change rate of an open area where the relief hole is opened to a distance that a plunger moves is set small in a first half of a period when the hole is being opened and is set large in a later half of the period.

In the initial stage when the relief hole starts being opened, though the plunger moves back and forth to some extent, large change in oil pressure is not caused if the open area of the relief hole does not change abruptly. Accordingly, the aforementioned reciprocal movement of the plunger can be avoided. In turn, noise caused due to oil pressure pulsation can be avoided. In order not to cause abrupt change in open area of the relief hole, the width of the relief hole open in the oil pressure adjusting chamber must be set small. Particularly, a part (an initially opened part) where the relief hole starts being opened by backward movement of the plunger must be set small. Alternatively, the width of the opening is made tapered towards an end in the forward direction of the plunger.

Formation of a narrow part of the relief hole where the width is small, however, requires fine machining to involve disadvantages in manufacture of a pump body.

Specifically, formation of a single relief hole having an open area necessary for oil pressure adjustment necessitates having a large diameter, with a result that the plunger is liable to be caught at the edge of the relief hole in sliding in the oil pressure adjusting chamber. This invites sliding failure of the plunger and damage to the plunger or the pump body, and in turn, invites failure in oil pressure adjustment. Therefore, two relief hoes are formed for minimizing the diameter of each relief hole.

With the two relief holes, oil is relieved from the two relief holes. Therefore, in order not to cause the aforementioned abrupt change in open area, the width of each part of the relief holes which is opened initially must be set smaller than in a case with a single relief hole (set to be a half thereof). This requires fine machining, bringing difficulty in manufacture of the pump body.

Particularly, in the case where the pump body is formed by die-casting a light alloy, such as an aluminum alloy for reducing the weight and the cost of the pump body, such difficulty is significant. In a case of die casting, each relief hole is formed by a pin-like movable core (a part of a die). In order to minimize the width of each relief hole, it is necessary to form the pin-like movable core in a peculiar form, for example, a form with an edge in a triangular shape in section. Die casting using a pin-like movable core in such a form makes the edge of the core to be a heat point, causing sticking.

As described above, the relief hole with a narrow width can prevent abrupt change in open area of the relief hole, but invites difficulty in manufacture of the pump body. Thus, the art encounters difficulty in coping with such conflict.

### Summary of the invention

The present invention provides a relief valve structure which invites no difficulty in manufacture of a pump body and causes no abrupt change in total open area of relief holes at the initial stage when the relief holes starts being opened.

The present invention solves the above problems by providing two relief holes one of which is opened in advance of the other when a plunger moves backward.

Specifically, the present invention provides a relief valve structure for an oil pump which is provided with an oil pressure adjusting chamber having two relief holes formed in an oil passage that sends discharged oil of the oil pump and a plunger arranged in the oil pressure adjusting chamber with force applied by a spring in a forward direction so as to close both the relief holes and in which the plunger moves backward in association with an increase in oil pressure of the oil pressure adjusting chamber to allow both the relief holes **(13, 14)** to be opened so that part of the discharged oil is relieved for adjusting pressure of supplied oil, the relief valve structure characterized in that:
a position where one of the relief holes starts being opened and a position where the other relief hole starts being opened are staggered in back and forth directions of the plunger so that the one relief hole starts being opened in advance of the other relief hole when the plunger moves backward and so that a state where only the one relief hole is opened changes in association with backward movement of the plunger to a state where both the relief holes are opened, and
the relief holes are formed so that an amount of change in total open area of the relief holes, which is caused in association with backward movement of the plunger, is smaller in the state where only the one relief hole is opened than in the state where both the relief holesare opened.

With the above arrangement, when the plunger starts moving backward in association with an increase in oil pressure of the oil pressure adjusting chamber, the one relief hole is opened in advance of the other relief hole. In the state where only the one relief hole is opened, the open area thereof does not change abruptly even when the plunger moves back and forth to some extent. Accordingly, the oil pressure does not change largely, and the plunger is prevented from repeating a reciprocating motion in a short period of time, with a result that noise caused due to oil pressure pulsation is prevented. When the plunger moves backward largely thereafter, both the relief holes are opened, ensuring the open area necessary for oil pressure adjustment to suppress an increase in oil pressure.

Opening of the one relief hole at the initial stage when the plunger starts moving backward reduces change in open area to one half of simultaneous opening of the two relief holes if the widths of the relief holes (widths intersecting at a right angle with the direction in which the plunger moves back and forth) are the same. In other words, the present invention prevents abrupt change in open area without setting the one relief hole which is opened at the initial stage when the plunger starts moving backward to be intolerably narrow, with a result of facilitation of formation of the relief holes. In sum, the present invention prevents abrupt change in open area without inviting difficulty in formation of the relief holes. Hence, the present invention is advantageous over the conventional one in prevention of repetition of the reciprocating motion of the plunger in a short period of time, and in turn, to reliable prevention of noise caused due to oil pressure pulsation.

Preferably, a part where the one relief hole is opened in advance of the other relief hole is small in width as it goes in a forward direction of the plunger.

The above arrangement provides an advantage in prevention of abrupt change in total open area of the relief holes at the initial stage when the plunger starts moving backward upon an increase in oil pressure of the oil pressure adjusting chamber.

Preferably, the oil pressure adjusting chamber and the relief holes are formed by die casing so that the oil pressure adjusting chamber forms a cylindrical hollowed space and the relief holes are open at a peripheral wall of the oil pressure adjusting chamber in one direction intersected at a right angle with an axial line of the cylindrical hollowed space.

The above arrangement facilitates formation of the relief holes with the use of a movable core. Accordingly, it is not required for prevention of abrupt change in total open area of the relief holes to set the width of the relief holes to be intolerably narrow, and consequently, the movable core is prevented from being a heat point.

### Brief Description of the Drawings

FIG. **1** is a front view of a pump body of an oil pump according to Embodiment 1 of the present invention.
FIG. **2** is a sectional view of the pump body taken along the line A-A in FIG. 1.
FIG. **3** is a sectional view of the pump body taken along the line B-B in FIG. 1.
FIG. **4** is a sectional view of the pump body taken along the line C-C in FIG. 1.
FIG. **5** is a front view of a pump body according to Modified Example 1 of Embodiment 1.
FIG. **6** is a front view of a pump body according to Modified Example 2 of Embodiment 1.
FIG. **7** is a front view showing relief holes of a pump body according to Embodiment 2 of the present invention.
FIG. **8** is a section of a part of the pump body taken along the line D-D in FIG. 7.
FIG. **9** is a front view showing relief holes of a pump body according to a modified example of Embodiment 2.

### Description of the Preferred Embodiments

Embodiments of the present invention will be described below with reference to the accompanying drawings.

### <Embodiment 1 >

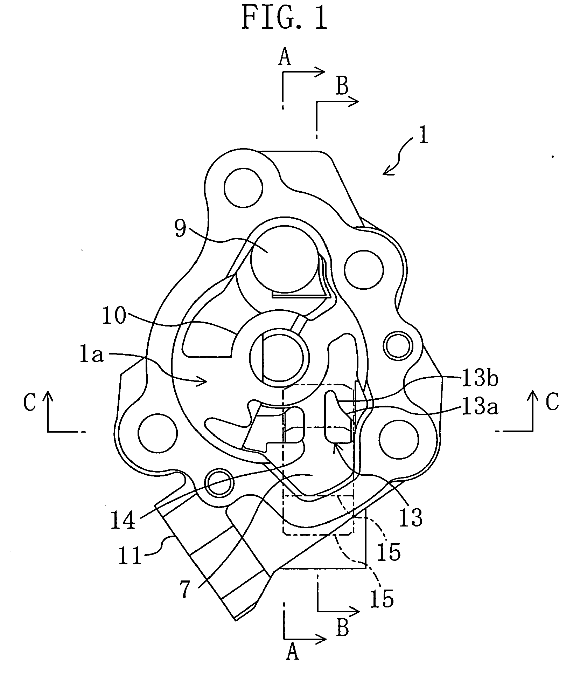

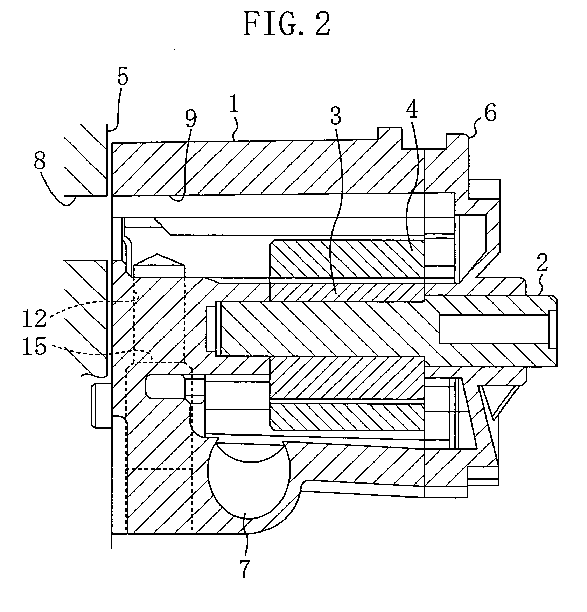

FIG. **1** shows a pump body **1** of an oil pump provided in an engine for an automobile. The oil pump is a trochoidal pump in which an inner rotor **3** and an outer rotor **4** which are joined to a shaft **2** are accommodated in the pump body **1,** and is mounted to a cylinder block **5** of the engine, as shown in FIG. **2.** A rotor chamber **1a** of the pump body **1** which accommodates the rotors **3, 4** has an opening at one end in the axial direction of the rotors **3, 4,** and a pump cover **6** covers the opening.

The shaft **2** is supported at one end thereof to a bearing boss **10** formed at the back of the pump body **1,** while protruding at the other end thereof outward from the pump cover **6.** A sprocket is mounted at the protrusion of the other end of the shaft **2** so that the inner rotor **3** is driven and rotated by a clank shaft of the engine.

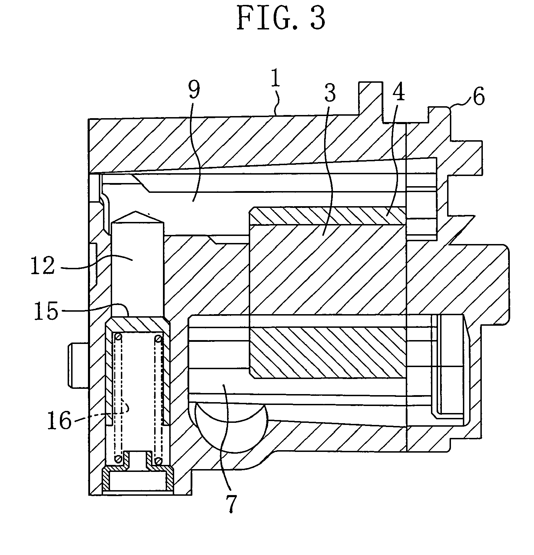

There are formed in the pump body **1** a pumping passage **7** in which oil in an oil pan of the engine is pumped up through a strainer and a discharge passage **9** in which oil discharged from the rotors **3, 4** flows toward an oil supply passage **8** of the cylinder block **5.** A strainer mounting portion **11** is provided at a base end of the pumping passage **7** in the pump body **1.** Further, as shown in FIG. **3,** in the pump body **1,** an oil pressure adjusting chamber **12** is formed so as to branch at the middle of discharge passage **9** and so as to extend towards the pumping passage **7,** and the oil pressure adjusting chamber **12** and the pumping passage **7** communicate with each other through two relief holes **13, 14** shown in FIG. **1.** A plunger **15** is provided in the oil pressure adjusting chamber **12** for opening or closing the relief holes **13, 14** according to oil pressure. In FIG. **1,** the plunger **15** which moves back and forth is indicated by dotted and dashed lines for showing the positional relationship between the relief holes **13, 14** and the plunger **15.**

The oil pressure adjusting chamber **12** is formed of a peripheral wall in a hollowed cylindrical shape extending in the direction intersected at a right angle with the axial center of the shaft **2** at a part displaced from the axial center thereof. The oil pressure adjusting chamber **12** has a step portion at the central part thereof, a large diameter part on the pumping passage **7** side, and a small diameter part on the discharge passage **9** side. In the larger diameter part (on the pumping passage **7** side) of the oil pressure adjusting chamber **12,** the plunger **15** is fitted so as to be capable of moving back and forth with the step portion used as a stopper at a forward end thereof. A spring **16** applies spring force thereto in the forward direction. Accordingly, when oil pressure on the small diameter part side of the oil pressure adjusting chamber **12,** that is, oil pressure of the discharge passage **9** is increased, the plunger **15** moves backward against the spring force of the spring **16.**

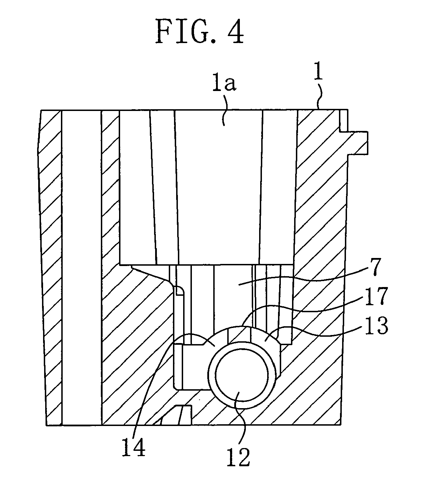

As shown in FIG. **1** and FIG. **4,** the relief hoes **13, 14** are open to the open side of the pump body **1** (the pump cover **6** side) at a partitioning wall **17** in a direction (parallel to the shaft **2)** intersected at a right angle with the axial line of the oil pressure adjusting chamber **12.** The partitioning wall **17** is a part of the peripheral wall of the oil pressure adjusting chamber **12** and separates the oil pressure adjusting chamber **12** at the large diameter part and the pumping passage 7. Accordingly, the relief holes **13, 14** are open at the large diameter part of the oil pressure adjusting chamber **12,** so as to be closed by the plunger **15** when the plunger **5** is located at the forward end position in contact with the step portion and so as to be opened by backward movement of the plunger **15.**

As shown in FIG. 1, the relief holes **13, 14,** in detail, one **13** of the relief holes distant from the bearing boss **10** of the pump body **1** and the other one **14** thereof near the bearing boss **10** are different from each other in shape. The one relief hole **13** forms a main opening part **13a** open at a part corresponding to the other relief hole **14** relative to the back and forth directions of the plunger **15** and an extended opening part **13b** continuing from the main opening part **13a** and extending farther than the other relief hole **14** in the forward direction of the plunger **15.** Accordingly, when the plunger **15** moves backward, the extended opening part **13b** of the one relief hole **13** is opened in advance of the other relief hole **14.** In other words, the part of the relief hole **13** where opening starts by backward movement of the plunger **15** and the part of the relief hole **14** where opening starts are staggered in the back and forth directions.

The extended opening part **13b** of the one relief hole **13** is narrowed, namely, tapered in width as it goes in the forward direction of the plunger **15,** and its tip end is rounded. Further, the main opening part **13a** of the one relief hole **13** gradually increases in width as it goes in the backward direction of plunger **15.** The angle of the increased width of the main opening part **13a** is larger than the angle of tapered width of the extended opening part **13b.** The other relief hole **14** forms an arc shape protruding in the forward direction of the plunger **15** at an end in the forward direction of the plunger **15.**

When oil pressure working on the plunger **15** becomes larger than the spring force of the spring **16** in the oil pressure adjusting chamber **12** upon an increase in the number of rotation of the pump in proportion to an increase in engine speed, the plunger **15** starts moving backward. Then, the extended opening part **13b** of the one relief hole **13** is opened first, so that oil is relieved from the oil pressure adjusting chamber **12** to the pumping passage **7** through the extended opening part **13b.** This lowers the oil pressure of the oil pressure adjusting chamber **12,** wherein the oil pressure lowers not abruptly. The width of the extended opening part **13b** is smaller than the total width of the relief holes **13, 14** at the time when both of them are opened, is smaller than the width of the main opening part **13a,** and is tapered in width. These arrangements are for causing no abrupt change in total open area of the relief holes **13, 14** in backward movement of the plunger **15.**

Hence, the phenomenon can be prevented in which the plunger **15** repeats a reciprocating motion in a short period of time when relief starts upon an increase in oil pressure of the oil pressure adjusting chamber **12.** In other words, rocking of the plunger **15** caused due to oil pressure pulsation is prevented, resulting in no noise generation.

Further, with the above relieve valve structure, since only the one relief hole **13** relieves oil at the initial stage of backward movement of the plunger **15,** abrupt change in total open area of the relief holes is prevented though the width of the extended opening part **13b** of the one relief hole **13** is not so small compared with the case where two relief holes starts relieving the oil simultaneously at the initial stage of backward movement of the plunger **15.**

When the oil pressure is further increased, the distance that the plunger **15** moves backward becomes large accordingly to cause the other relief hole **14** to be opened accompanied by opening of the one relief hole **13.** In FIG. 1, the dashed-two-dotted lines indicate the plunger **15** at the forward end while the dashed-dotted lines indicate it at the backward end. Opening of both the relief holes **13, 14** ensures the open area necessary for relieving the oil in oil pressure adjustment and suppresses an increase in oil pressure. Further, the width of the main opening part **13a** of the one relief hole **13** increases gradually as it goes in the backward direction of the plunger **15,** and the end part of the other relief hole **14** in the forward direction of the plunger **15** is in an arc shape protruding in the forward direction thereof. Accordingly, abrupt change in oil pressure can be prevented which is liable to be caused at a state transition between the state where only the extended opening part **13b** is opened and the state where both the relief holes **13, 14** are opened.

Moreover, the relief holes **13, 14** are open to the open side of the pump body 1 (the pump cover **6** side) at the partitioning wall **17** that separates the oil pressure adjusting chamber **12** and the pumping passage 7 in the direction intersected at a right angle with the axial line of the oil pressure adjusting chamber **12.** Accordingly, in view of manufacture of the pump body **1** by die casting, both the relief holes **13, 14** can be formed by applying a pin-like movable core from the opening of the pump body **1.**

Though the extended opening part **13b** of the one relief hole **13** is tapered, the width of the extended opening part **13b** needs not be small, in other words, the pin-like movable core needs not have a sharp edge. Hence, the core is prevented from being a heat point in die casting, causing no deficiency, such as sticking, which is advantageous in casting the pump body **1.**

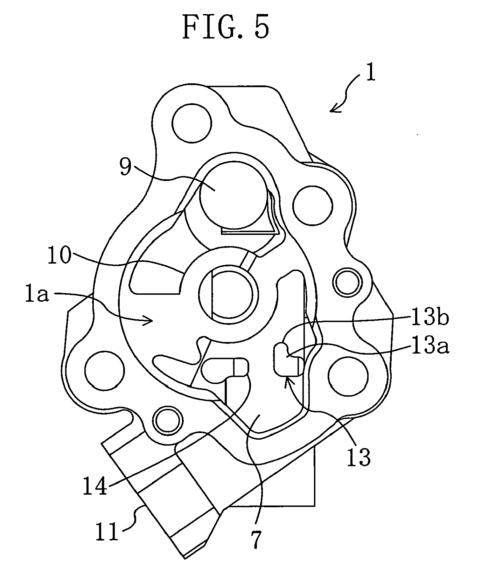

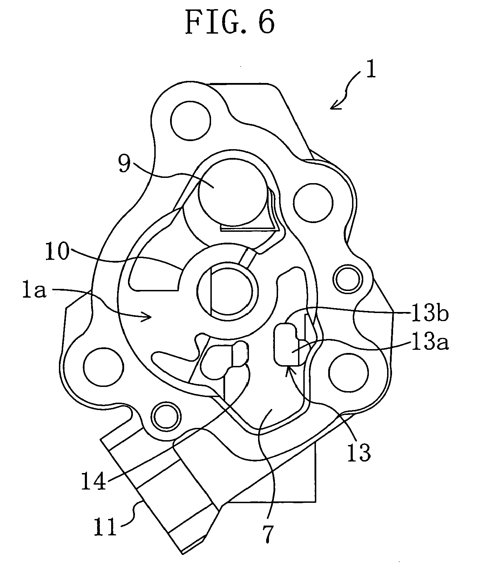

Furthermore, the position where the one relief hole **13** starts being opened and the position where the other relief hole **14** starts being opened are staggered, so that each relief hole **13, 14** can be arranged easily so as not to interfere with the bearing boss **10.**
- Modified Example 1 -
   As shown in FIG. **5,** the main opening part **13a** of the one relief hole **13** and the other relief hole **14** are formed wide in the transverse direction extending in the peripheral direction of the partitioning wall **17,** and the extended opening part **13b** of the one relief hole **13** extends at a given width as it goes in the forward direction of the plunger **15** from the main opening part **13a** and has a rounded end.
   In Modified Example 1, as well, the width of the extended opening part **13b** is smaller than the total width of the relief holes **13, 14** at the time when they are opened, causing no abrupt change in open area for relief at oil relief start by backward movement of the plunger **15.** Hence, abrupt change in oil pressure can be prevented.
- Modified Example 2 -
   As shown in FIG. **6,** the extended opening part **13b** of the one relief hole **13** is formed wide to some extent, and an arc-shape part with small width protruding in the forward direction of the plunger **15** is formed at the edge of the other relief hole **14** in the forward direction of the plunger **15.** In this case, similarly to each case described above, no abrupt change in open area for relief at oil relief start by backward movement of the plunger **15** is caused. Hence, abrupt change in oil pressure can be prevented.

### <Embodiment 2>

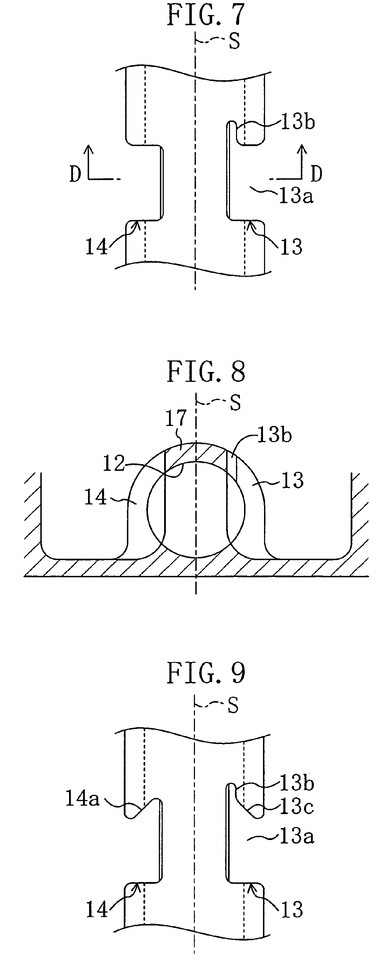

The present embodiment is shown in FIG. **7** to FIG. **9.** As shown in FIG. **7** and FIG. **8,** the main opening part **13a** of the one relief hole **13** and the other relief hole **14** are arranged symmetrically with respect to a plane **S** passing the axial line of the cylindrical oil pressure adjusting chamber **12,** and each of them forms an arc window extending in the peripheral wall of the oil pressure adjusting chamber **12** in the peripheral direction thereof. Further, the narrow extended opening part **13b** extends at a given width in the forward direction of the plunger **15** from the main opening part **13a** of the one relief hole **13** and has a rounded end. In the present embodiment, also, no abrupt change in open area for relief at oil relief start by backward movement of the plunger **15** is caused. Hence, abrupt change in oil pressure can be prevented.

In an example shown in FIG. **9,** tapered parts **13c, 14a** gradually tapered in width as it goes in the forward direction of the plunger **15** are formed in the main opening part **13a** of the one relief hole **13** and the other relief hole **14,** respectively. The extended opening part **13b** continues from the end of the tapered part **13c** and extends in the forward direction of the plunger **15** at a given width. In the present case, with the tapered parts **13c, 14a,** abrupt change in oil pressure can be prevented in a transition state between the state where only the extended opening part **13b** is opened and the state where both the relief holes **13, 14** are opened.

## Claims

1. A relief valve structure for an oil pump which is provided with an oil pressure adjusting chamber **(12)** having two relief holes **(13, 14)** formed in an oil passage that sends discharged oil of the oil pump and a plunger **(15)** arranged in the oil pressure adjusting chamber **(12)** with force applied by a spring **(16)** in a forward direction so as to close both the relief holes **(13, 14)** and in which the plunger **(15)** moves backward in association with an increase in oil pressure of the oil pressure adjusting chamber **(12)** to allow both the relief holes **(13, 14)** to be opened so that part of the discharged oil is relieved for adjusting pressure of supplied oil, the relief valve structure **characterized in that**:
a position where one **(13)** of the relief holes **(13, 14)** starts being opened and a position where the other relief hole **(14)** starts being opened are staggered in back and forth directions of the plunger **(15)** so that the one relief hole **(13)** starts being opened in advance of the other relief hole **(14)** when the plunger **(15)** moves backward and so that a state where only the one relief hole **(13)** is opened changes in association with backward movement of the plunger **(15)** to a state where both the relief holes **(13, 14)** are opened, and
the relief holes **(13, 14)** are formed so that an amount of change in total open area of the relief holes **(13, 14),** which is caused in association with backward movement of the plunger **(15),** is smaller in the state where only the one relief hole **(13)** is opened than in the state where both the relief holes **(13, 14)** are opened.

2. The relief valve structure for an oil pump of Claim 1,
wherein a part where the one relief hole **(13)** is opened in advance of the other relief hole **(14)** is small in width as it goes in a forward direction of the plunger **(15).**

3. The relief valve structure for an oil pump of Claim 2,
wherein the oil pressure adjusting chamber **(12)** and the relief holes **(13, 14)** are formed by die casing so that the oil pressure adjusting chamber **(12)** forms a cylindrical hollowed space and the relief holes **(13, 14)** are open at a peripheral wall **(17)** of the oil pressure adjusting chamber **(12)** in one direction intersected at a right angle with an axial line of the cylindrical hollowed space.
